# EUROPEAN PATENT APPLICATION

(11) **EP 1 912 167 A1**
(43) Date of publication of application: **16.04.2008**
(21) Application number: 07251940.8
(22) Date of filing: 11.05.2007
(51) Int. Cl.: G06Q 10/00

(54) **A process for visualizing, analyzing and developing products, and a product**

(30) Priority: 10.10.2006 BR PI0604256
(71) Applicant: Natura Cosméticos S.A., 06882-700 Itape Cerica da Serra SP (BR)
(72) Inventor: Luis Gustavo Scrassolo Martini, 05021-010 Pompéia, SP (BR); Simoni Chitarri Souza, 05056-020 Lapa, SP (BR)
(74) Representative: Burt, Matthew Thomas

(57) **Abstract**

The present invention relates to a process for visualizing, analyzing and developing products, particularly products for industrial manufacture, which defines quantity and characteristics of at least two differentiation vectors (DV), simulates and develops at least one scenario for the manufacture of a product by combining the vectors (DV) and classifying, ranking and prioritizing the new product as a function of the scenario.

## Description

This application claims priority of Brazilian patent case No. P10604256-2 filed on October 10th, 2006, the disclosure thereof being herby incorporated by reference.

The present invention relates to a process for visualizing, analyzing and developing products, particularly products for industrial manufacture, which enables one to evaluate the feasibility of developing and manufacturing such products, as well as makes the development thereof possible by means of this analysis of feasibility and development. The present invention further relates to a product developed with the process developed.

### Description of the prior art

Manufacturers of any products whatever face an obstinate competition on the competitive consumer markets, a situation that becomes more and more the rule in the present highly globalized economical situation.

Especially the demand for innovatory and efficient products, including in the ecological sense, is becoming greater and greater, forcing companies to invest heavily in technological innovation and cost reduction.

The increase in the demand of the average consumer, the need to export, the State regulation and the increase in cost of inputs have been leading to a dramatic increase in the cost of developing new products, and often the additional costs may not be passed on to the final consumer, which decreases the profit margin of the manufacturers. Therefore, a manufacturer that manages to reduce costs without lowering the quality of the product will have a great advantage on the market.

As examples of sectors in which there are very high costs with development of innovations / products, one can cite the automobile industry, the pharmaceutical industry and the beauty-product industry, among others.

Therefore, the international situation generates a dichotomy, insofar as the consumer market requires more and more efficient products that are less harmful to the environment, while the profit margins are narrower and narrower and the costs of developing new products grow exponentially.

One of the ways of reducing costs which great corporations use most is the development and the employment of new strategies, strategic methods, development of information technology (TI), solutions and processes, among others.

Due to the present situation, the process of developing new products by focusing on optimization of the available resources and on the election of development priorities is more and more important and strategic, so that the development of a product will be effected in a well-advised manner, minimizing the economic risks and maximizing the chance of success.

Indeed, this expedient has become a focal point for great corporations, since it has been proved that the development of new products has an impressive impact on costs, quality, satisfaction of the consumer and, by inference, on the competitive advantage or disadvantage of an industry in the face of its competitors.

The so-called Product Development Process (PDP) is a process by which a determined company, regardless of its branch of activity, manages to transform market opportunities and technical possibilities into information, data and resources required for the manufacture of a product to be put on the market. If the PDP is to be effective, it should involve not only the engineering and manufacturing areas, but also marketing and other areas of the companies.

In a general way, a PDP is structured in several phases or stages, although other structural aspects can present variations.

A first type of possible PDP presents the classic sequence of 4phases, namely: conceptual development, product planning, engineering process and pilot production, after which the serial production takes place.

Another interpretation of the subject proposes a cycle of life for the product comprising the steps of conceptual development, design development, manufacture and operation.

A quite known PDP, which is known informally as an innovation "funnel", comprises the phases of pre-briefing, briefing, technical and financial feasibility, executive planning, launching and analysis of the product after the launching (1 to 6 months).

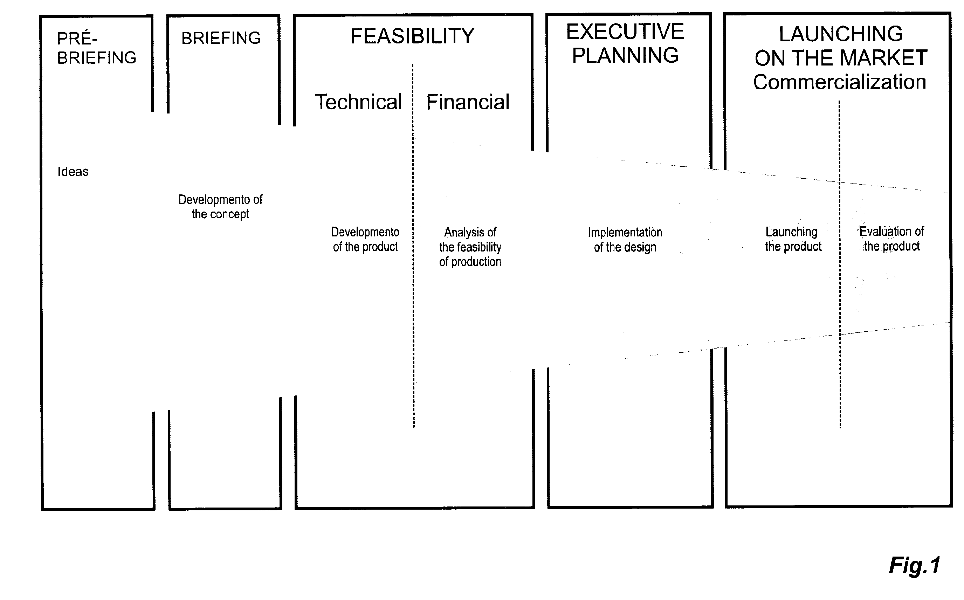

In the mentioned order, the product is analyzed and, after each step has been completed, a committee decides whether the maturity of the project is sufficient for it to go ahead. A schematic diagram of this PDP can be found in figure 1 of the present specification.

With the PDP's, the companies have been able to know and map the steps of development of their products better, markedly those relating to their core business , like the development of products, manufacture, sales and distribution and finances, among others. The practice of PDP's is therefore complex, since it involves various areas of activity.

In this knowledge process, which - this should be stressed - also regards the technical steps of development, manufacture and assembly, one identifies the standard product that represents the state-of-the-art model.

The next step is the identification of the deficiencies and opportunities of improvements, with definition of a new model that defines a new paradigm, superior to that of the product that defines the state of the art.

The final step is transforming the model that defines the new paradigm in a standard model and initiating the cycle again, aiming at a new and even superior model.

For the PDP to be implanted and operated, the tools that enable the practice thereof should be within reach of the people that will use it, which presupposes great interaction and interdependence, among others.

It is evident that the type of PDP to be used depends intrinsically of a number of variables, as for instance the branch of activity of the company, the technology that it uses and develops, the level of innovation with which it operates, the environmental responsibility, the strategy of supply of its products, etc.

### Objectives of the invention

The objective of the present invention is to provide a process for visualizing, analyzing and developing products, markedly products for industrial manufacture, which will enable one to analyze easily the potentialities of the products and of the needs of the company, as well as the costs involved for the development of these improvements, bringing a considerable competitive advantage to those that use it.

It is also an objective of the present invention to provide a process for visualizing, analyzing and developing products, markedly products for industrial manufacture, which defines a systematic approach for selection of the best PDP methodology through the use of the concept of differentiation vectors, with a view to optimize the development process and the increase in assertiveness of the results presented.

Finally, it is an objective of the present invention to provide a product, particularly a product for industrial manufacture, obtained by the process defined above.

### Brief description of the invention

The objectives of the present invention are achieved by means of a process for visualizing, analyzing and developing products, particularly products for industrial manufacture, which comprises the following steps.
- Step (i): delimiting at least one reference model product;
- Step (ii): determining at least two differentiation vectors;
- Step (iii): combining the differentiation vectors;
- Step (iv): comparing at least one new product to be developed with the delimited differentiation vectors;
- Step (v):mapping scenarios, ranking and prioritizing the new product to be develop from the comparison thereof with the differentiation vectors defined; and
- Step (vi): developing the new product from the ranking and prioritizing data.

Also, the objectives of the present invention are achieved by means of a process for visualizing, analyzing and developing products, particularly products for industrial manufacture, which comprises the following steps.
- Step (i): delimiting at least one reference model product;
- Step (ii): determining at least two differentiation vectors;
- Step (iii): combining the differentiation vectors;
- Step (iv): comparing at least one new product to be developed with the delimited differentiation vectors;
- Step (v):mapping scenarios, ranking and prioritizing the new product to be develop from the comparison thereof with the differentiation vectors defined; and
- Step (vi): determining at least one new reference product on the basis of the characteristics of the product to be developed.

Further, the objectives of the present invention are achieved by means of a process for visualizing, analyzing and developing products, particularly products for industrial manufacture, which defines quantity and characteristics of at least two differentiation vectors, simulates and develops at least one scenery for manufacture of product from the combination of the vectors and classifies, ranks and prioritizes the new product depending on the scenery.

Finally, the objectives of the present invention are achieved by means of a product obtained by the process defined above.

The present invention has the following advantages.
(i) aiding the company to define all the possible variations of the model of process for developing the product by combining different differentiation vectors;
(ii) enabling the correct selection and utilization of the scenery suitable for the product under development, involving all the areas only inasmuch as this is necessary;
(iii) enabling the company, on the basis of the above, to develop new products with higher quality, less redundancy and rework, all of this in a more reduced time and in a more objective, specific, simple and direct manner; and
(iv) making it easier for the companies to define their own differentiation vectors, so that the optimization can be maximum.

### Brief description of the drawings

The present invention will now be described in greater detail with reference to embodiments represented in the drawings. The figures show:
- Figure 1 is a schematic view of a diagram representing the Product Development Process (PDP) known at present;
- Figure 2 is a schematic view of a first diagram representing the process for visualizing, analyzing and developing products of the present invention;
- Figure 3 is a schematic view in greater detail and representing the process for visualizing, analyzing and developing products of the present invention.

### Detailed description of the figures

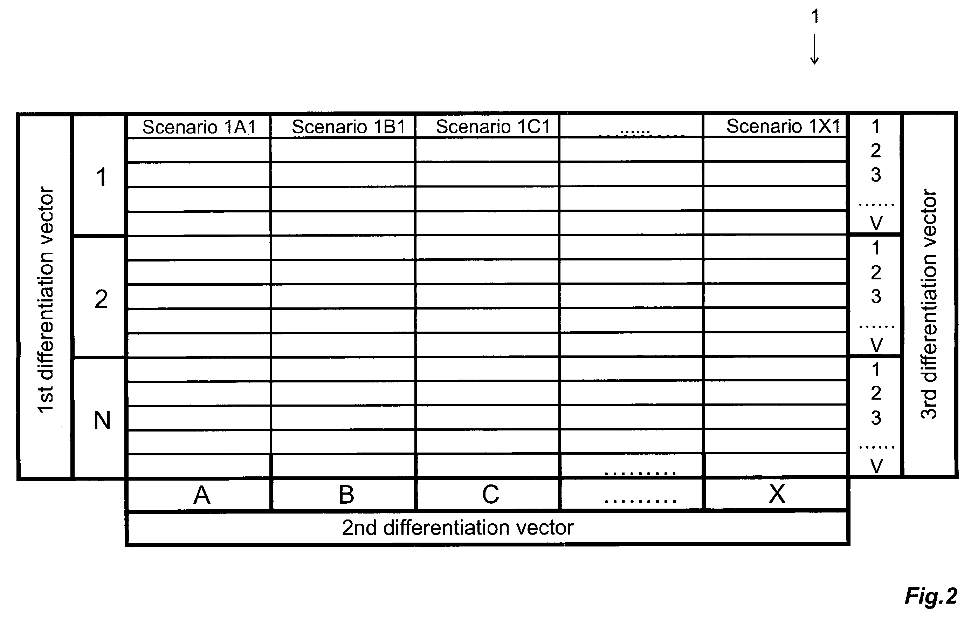

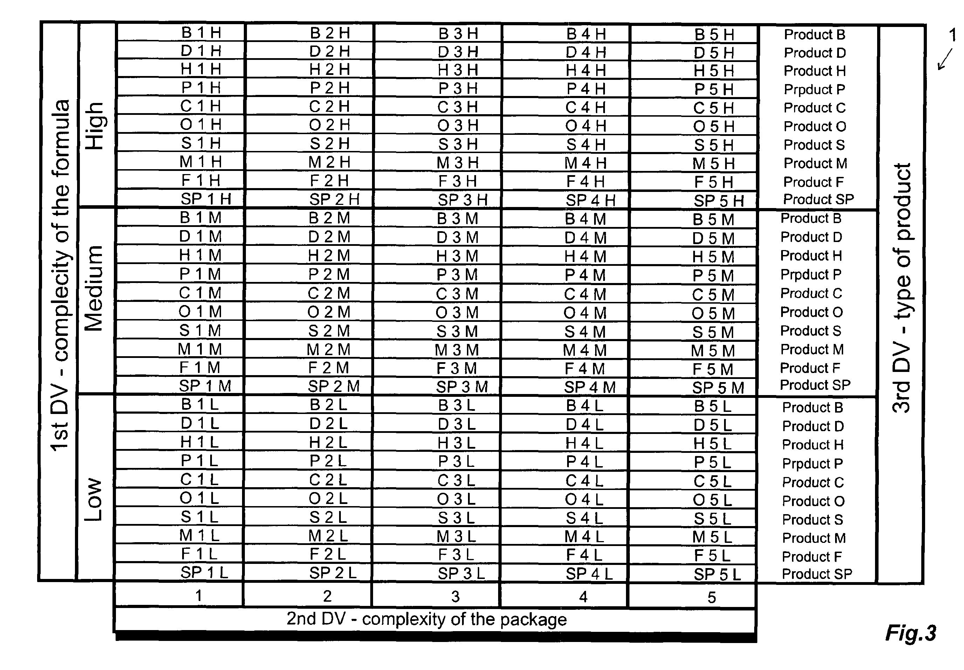

The process for visualizing, analyzing and developing products of the present invention, the diagram of which is schematically illustrated in figures 2 and 3 with reference number 1, as already said before, aims at visualizing, in an easy and systematic manner, the analysis of the potentialities of the products and of the needs of the companies and of the costs involved in developing these improvements, bringing a considerable competitive advantage to those that use it.

The great innovation of the process 1 is the utilization of the so-called differentiation vectors (DV'S), which are nothing else than parameters or guidelines that configure alternatives for analysis of feasibility, which will culminate in a precise result about the panorama for the development of a determined industrial product.

The differentiation vectors enable the particularization / adaptability of the process 1 depending on the intrinsic characteristics of each company that can use it and on the products to be developed/manufactured. By the way, one should note that, even though the utilization of the process 1 makes sense mainly in the development of products that can be produced industrially, nothing prevents it from having other uses with the due adaptations, as for example, for the development of manufacturing processes or even aiming at the management/training of human capital, among other possibilities.

The differentiation vector, which is the main innovation of the process 1 of the present invention, enables its result to provide the company that uses it with a more precise scenery and a more faithful and accurate result and function of the existing premises (and that will be mentioned in detail later). One of the its main advantages is to guarantee or at least to maximize enormously the correct association/synergy of the product to be developed with the process 1, which, as already said, increases the assertiveness and the presumption of assertiveness of the result.

The process 1 of the present invention also begins with a step of identifying a standard product that represents the state-of-the-art paradigm. This reference model represents the starting point for the company to develop a new product. The reference model may be a product already manufactured by the company, the product from some competitor or any other that is the target to be surpassed.

Additionally, the reference model should incorporate or consider information/characteristics/situations as core business of the company, an area of the economical activity in which it acts, stage of maturity / development of the company, manufacturing techniques and equipment used, characteristics of the target public, etc.

Evidently, the reference model should be used while it is efficient for its mission, and may be replaced when necessary or expedient. And, evidently, the reference model should be replaced at the end of the cycle of development of a product, when this developed product, superior to the model, becomes the new reference to be surpassed and improved.

An additional and important consideration that should be made about the reference model is that a determined company that acts in a determined activity can have a generic model and another company can create a model that is indeed a variation of the model created by the first company. Evidently, the model created by the second company may vary due to some project characteristics, although it has derived from the generic model.

Therefore, in accordance with all the foregoing, it becomes clear that the process 1 can exhibit particularities of complexity, essential characteristics, variations referring to the product, technology involved and organization for each company that uses it, and these characteristics may vary greatly, without it failing to be included in the scope of the accompanying claims.

In other words, the quantity and characteristic of the differentiation vectors (and evidently the results presented) vary from company to company, markedly if these companies (i) belong to different economic branches and/or (ii) develop products with great technological differences and/or (iii) use different production methods and strategy (varying, for instance, as a function of the consumer market, if one of the companies produces for commercialization on the Brazilian market and the other develops the product for exportation to the Japanese market).

Therefore, in order to customize the process 1 so that its aims will be achieved and the result presented will have the greatest assertiveness possible, each company should define the quantity and the quality (characteristic) of its vectors, which are then combined.

Anyway, the process 1 of the present invention maximizes the selection of the differentiation vectors, the number of vectors that can be used without the results needing any too complex processing or questionable practical utility. Thus, for the sake of arrangement of the issue, the process 1 of the present invention presupposes at least two, and preferably three main differentiation vectors, since the latter is a number that optimizes the representation of all the possible combinations of vectors in a two-dimensional matrix (see figure 2 and especially figure 3), while providing a reasonable number of scenarios to be analyzed.

However, it is perfectly possible for the process 1 of the present invention to make use of four or more differentiation vectors, combining the three main vectors, as illustrated in figures 2 and 3, and then replacing each of them. In the event of using 4 vectors, for instance, the first matrix for analysis (see figure 2) will consider the vectors 1, 2, and 3 (M1, 2, 3). From here onwards each of the three vectors is replaced by the fourth one and will therefore have, in addition to the original matrix (M1,2,3), the matrices (M1,2,4), (M1,3,4) and (M2,3,4). From the comparative analysis of the four matrices one can map all the scenarios and, on the basis of them, either prioritize or "rank" the opportunities of investment and development.

The company can prioritize the choice of the differentiation vectors on the basis of the information/elements that influence the process 1 most, as for instance, market requirements, function/objective of the product, critical and/or essential parts or subsystems, manufacturing processes, elements developed ion conjunction with suppliers, among numberless others. As a general rule, the more one of these elements influence the result of the process 1, the greater the importance of selecting it as a differentiation vector.

As an example, one should imagine a big company manufacturing cleaning products, which has in its product portfolio, for instance, three types of powdered soap, the first of them designed for the class-A consumer, who pays a high price for the product, a second type designed for the consumer having income up to 2 minimum wages, and a third type for exportation to another country, the market of which is not fond of the product in the powdered form, but only in the liquid form.

In the first product (designed for class A), the sales price is not determinant as in the case of the second product, which is designed for a consumer public having a very low buying power. In the same way, the package of the first product may be more luxurious and elaborate than that of the second one, due to the market "maneuvering space" coming from its higher sales prices.

And the third product, in turn, has to have different formulation and carrier, as well as the package, due to the particularities and differences of its consumer market.

Therefore, in this hypothetic case, three important characteristics that could be selected as differentiation vectors are (i) price, (ii) type of package and (iii) characteristics of the consumer market, customized by the predilection for the product in the powdered or liquid form.

Each of the vectors mentioned could have information about other characteristics and particularities of the consumer market, such as the most desired type of perfume, hither or lower foaming level (amounts of foam), etc., as well as other variations in the package, besides its appearance, such as shape, existence of a refill, volume, constituent material, etc.

As other examples of differentiation vectors, besides the three main ones mentioned above, one could mention, for instance, regulatory limitations of the sanitary surveillance agencies where the products will be sold.

As a result, for each possible combination of the differentiation vectors, a specific scenario for the development of the product is illustrated, always having the reference product of the company as a basis, which in the present exemplifying case could be the current powdered soap produced for class A or any other. This is the moment when there is a comparison between the new product to be developed with the actual situation of the vectors that will enable one to contextualize it or to rank it, which will be said later.

Each scenario will have different situations, according to the differentiation vectors used.

In the example illustrated in figure 2, where one can see the generic representation of a matrix of the process 1 of the present invention, one can find the following:
(a) The 1^{st} differentiation vector has several values (N). Considering the above example, this vector being the price, closely related to the purchasing power of the population, each of these values could be the price of the product (for example, up to R$ 2,00, from R$ 2,00 to R$ 3,00, from R$ 3,00 to R$ 4,00, and so on).
(b) The 2^{nd} differentiation vector has several values (M). Considering the above example, this vector being the package, each of these values could be a particularity of this package (for example, whether constituted by cardboard or plastic, whether of 1 kg or 2kg, and so on).
(c) The 3^{rd} differentiation vector has several values (V). Considering the above example, this vector being the consumer market, each of these values could be a particularity of this market (for example, purchasing power, preferences for the consistency of the product, the perfume, the foaming, etc.).
(d) Each cell in the matrix represents a specific scenario for the process of developing the product. For instance, the cell **1-A-1** represents the specific scenario in that case, which is the combination of the results of each of the differentiation vectors. Hypothetically, the cell 1-A-1 could mean a powdered soap with a price of R$ 3,00 up to $ 4,00, with a package constituted by cardboard and for sale on a consumer market that accepts powdered products well.

As mentioned before, a 4^{th} hypothetical differentiation vector (not shown) could be the purchasing power of the population, and each of the values would correspond to the income range of the consumer (for example, up to 2 minimum wages, from 2 to 5 minimum wages, from 5 to 10 minimum wages, and so on).

For carrying out the process 1 of the present invention, the activities are developed by competent people, who are, for instance and in a non-limitative manner, experts in the areas of research-and-development, quality, finances (for example, budget), purchases, marketing, regulatory matters, etc.

By using the knowledge and experience, besides the previous project practice, the competent people can map the development of the product, defining quantity and characteristics of the differentiation vectors and simulating/developing all the possible scenarios, in accordance with the combination of the vectors and always considering the reference model, which is the objective to be surpassed. Once all the differentiation vectors have been previously determined, the people can classify each new project by using the process 1, already initiating it within a favorable scenario.

Figure 3 illustrates, in greater detail, a matrix representative of the process 1 for visualizing, analyzing and developing products of the present invention.

In this second example, one illustrates a big-sized company, the portfolio of which comprises hundreds of products in various correlated areas. These products exhibit complex chemical formulations, which need to be concomitantly stable, pleasing, confer a cosmetic effect, be biodegradable and not cause any kind of adverse reaction.

The products of this company comprise mainly a package, which may be a bottle, a box, etc., and a formulation, which is packed in the package. The formulation is known as an ingredient, and mixing/homogenizing processes, concentration and velocity of this mixture are critical and relevant features for the product to fulfill its purpose.

The various lines of products exhibit greater or lesser complexity, and so various scenarios have been developed for representing these variations of the reference model of the company.

In order to determine the differentiation vectors, a list of elements that influences the product-development process has been created, some important elements identified are (i) number of product categories, (ii) specification of the formulas and packages, (iii) production requirements, (iv) complexity of the formula, (v) requirements for product testing, (vi) visual programming /treatment of the packages, (vii) requirements for package testing, (viii) manufacturing processes, (ix) regulatory guidelines, etc.

From this initial list, the elements that influence the product-development most were selected and grouped by the people responsible by the process.

For instance, the elements (ii), (vi) and (vii) were grouped in the differentiation vector called "complexity of the package" (illustrated in figure 3 as 2^{nd} differentiation vector).

Identically, the elements (ii), (iv) and (ix) were grouped in the differentiation vector called "complexity of the formula" (illustrated in figure 3 as 1^{st} differentiation vector).

Finally, the third differentiation vector corresponds to the element (i) (product category), since one should work out a product development plan for each of them.

As far as the first differentiation vector (complexity of the formula) is concerned, it may exhibit the following variations:
- *Low complexity (L):* minor alterations, fragrance modification in a formula of known structure;
- *Moderate complexity (M):* reformulation and utilization of concepts already known on the market;
- *High complexity (H):* new formula, new manufacturing process, new market objectives, restrictive formulas (example, biodegradable formulas).

As far as the second differentiation vector (complexity of the package) is concerned, it may exhibit the following variations:
- *Level* 1: extent of the line or creation of a new visual programming;
- *Level 2:* bottle extruded from a blow mold and cap in a single piece;
- *Level 3:* development of a bottle provided with imprints and respective cap;
- *Level 4:* innovatory materials with a complex construction (example, narrow dimensional tolerance);
- *Level 5:* Projects with more than one mold with complex manufacture and narrow dimensional tolerance.

Finally, as far as the third differentiation vector (product category) is concerned, it may exhibit the following variations:
- Product B
- Product D
- Product H
- Product P
- Product C
- Product O
- Product S
- Product M
- Product F
- Product SP

The combination of all the above elements for each differentiation vector enables the establishment of hundreds of possible scenarios for product project and development.

Each cell of the matrix of figure 3 has a code representing (i) the product category , (ii) the complexity of its package, and (iii) the complexity of its formula.

As an example, the cell D-1-H means a type-D product, with a low package complexity (level 1) and a high (H) formula complexity.

If the codes of the matrix of figure 3 are replaced by the names of the products being developed, this matrix enables one to visualize a scale of difficulty/expediency for development of these new products, making it easily possible, in this already-mentioned contextualization, to rank them and concentrate the resources of the company on the most advantageous developments.

By previously classifying the new product to be developed in the three differentiation vectors, one can easily see its positioning in the matrix. And once the ideal scenario for development has been chose (for example, by focusing the resources on the development of H-type products with low complexity of the formula and of the package (cell **H-1-L**), the project (s) can be initiated, entering into the funnel already mentioned before and illustrated in figure 1.

The development of a new product must necessarily follow the steps mentioned above. For instance, at the beginning of the project that includes a new formulation, one should define the potential countries where the product will be marketed, since some ingredients of the formula may have different quantity and concentration regulatory controls in the different countries.

A project that involves replacement of packages as part of a product development process does not need analysis of the regulatory questions. However, one should carry out analysis of compatibility between the package material and the product, with a view to verify whether there is some adverse reaction.

Therefore, the specific scenario is essential for guaranteeing that only the necessary studies and development should be carried out, and this is a guarantee that all the responsible areas will be involved.

Therefore, in essence the process 1 of the present invention comprises the following steps:
- Step (i): delimiting at least one reference model product;
- Step (ii): determining at least two differentiation vectors;
- Step (iii): combining the two differentiation vectors (DV);
- Step (iv): comparing at least one new product to be developed with the delimited differentiation vectors (DV);
- Step (v):mapping scenarios, ranking and prioritizing the new product to be develop from the comparison thereof with the differentiation vectors (DV) defined; and
- Step (vi): developing the new product from the ranking and prioritizing data and/or delimiting at least one new reference product on the basis of the characteristics of the product to be developed.

Further, any product obtained by the process 1 of the present invention is a novel and inventive invention.

The present invention has the following advantages.

The process 1 of the present invention helps a company to define all the possible variations of the model of product development process by combining different differentiation vectors.

The process 1 enables the correct selection and utilization of the scenario suitable for the product under development, involving all the areas only insofar as this is necessary.

From the above, the process 1 enables the company to develop new products with higher quality, less redundancy and rework, all of this in a more reduced time and in a more objective, well-oriented, simple and direct manner.

The process 1 makes it easy for the companies to define their own differentiation vectors, so that the optimization will be maximum.

Preferred embodiments having been described, one should understand that the present invention embraces other possible variations, being limited only by the contents of the accompanying claims, which include the possible equivalents.

## Claims

1. A process for visualizing, analyzing and developing products, particularly products for industrial manufacture, **characterized by** comprising the following steps:
- step (i): delimiting at least one reference model product;
- step (ii): determining at least two differentiation vectors (DV);
- step (iii): combining the differentiation vectors (VD);
- step (iv): comparing at least one new product to be developed with the differentiation vectors (DV) delimited;
- step (v): mapping scenarios, ranking and prioritizing the new product to be developed on the basis of a comparison thereof with the differentiation vectors delimited (DV); and
- step (vi): developing the new product on the basis of the ranking and prioritizing data.

2. A process for visualizing, analyzing and developing products, particularly products for industrial manufacture, **characterized by** comprising the following steps:
- step (i): delimiting at least one reference model product;
- step (ii): determining at least two differentiation vectors (DV);
- step (iii): combining the differentiation vectors (VD);
- step (iv): comparing at least one new product to be developed with the differentiation vectors (DV) delimited;
- step (v): mapping scenarios, ranking and prioritizing the new product to be developed on the basis of a comparison thereof with the differentiation vectors delimited (DV); and
- step (vi): delimiting at least one new reference product on the basis of the characteristics of the product to be developed.

3. A process according to claim 1 or 2, **characterized in that** the step (1) of delimiting at least one reference model product corresponds to the identification of a standard product that represents the state-of-the-art paradigm.

4. A process according to claim 3, **characterized in that** the reference model product delimited in step (i) represents the starting point for the development of a new product.

5. A process according to claim 1 or 2, **characterized in that** the step (ii) of determining at least two differentiation vectors (DV) corresponds to the determination of parameters or guidelines that configure means for analysis of the feasibility.

6. A process according to claim 1 or 2, **characterized in that** the step (iii) of combining the differentiation vectors enables one to visualize specific scenarios for the development of the product.

7. A process according to claim 1, 2 or 6, **characterized in that** the step (iii) refers to the combination of three differentiation vectors (DV).

8. A process according to claim 1 or 2, **characterized in that** the step (iv) of comparing at least one new product to be developed with the differentiation vectors (DV) delimited enables one to classify each new product within one more or less favorable scenario.

9. A process according to claim 1 or 2, **characterized in that** the step (v) of mapping scenarios, ranking and prioritizing the new product to be developed by comparing it with the differentiation vectors (DV) delimited enables one to make or not make decisions regarding its manufacture as a function of the scenario supplied by step (iv), concentrating efforts on the most advantageous cases.

10. A process according to claim 1, **characterized in that** the step (vi) of developing the new product by ranking and prioritization takes place when the scenario is considered to be favorable in step (v).

11. A process for visualizing, analyzing and developing products, particularly products for industrial manufacture, **characterized in that** it defines quantity and characteristics of at least two differentiation vectors (DV), simulates and develops at least one scenario for manufacturing a product by combining the differentiation vectors (DV) and classifies, ranks and prioritizes the new product depending on the scenario.

12. A product **characterized by** being obtained by means of the process defined in claims 1 to 11.
